# EUROPÄISCHE PATENTANMELDUNG

(11) **EP 4 250 147 A1**
(43) Veröffentlichungstag der Anmeldung: **27.09.2023**
(21) Anmeldenummer: 22164332.3
(22) Anmeldetag: 25.03.2022
(51) Int. Cl.: G06F 21/44, G06F 9/455, G06F 21/53, G06F 21/57, H04L 9/40

(54) **VERFAHREN UND SYSTEM ZUR EINRÄUMUNG VON ZUGRIFFSRECHTEN AN STEUERUNGSANWENDUNGEN EINES INDUSTRIELLEN AUTOMATISIERUNGSSYSTEMS**

(71) Anmelder: Siemens Aktiengesellschaft, 80333 München (DE)
(72) Erfinder: Hoch, Maximilian, 91325 Adelsdorf (DE); Kob, Peter, 90562 Heroldsberg (DE)
(74) Vertreter: Siemens Patent Attorneys

(57) **Zusammenfassung**

Die Erfindung betrifft eine Einräumung von Zugriffsrechten an Steuerungsanwendungen eines industriellen Automatisierungssystems. Dabei werden erste Steuerungsanwendungen (113, 123) mittels Software-Containern bereitgestellt, die in eine auf einem Host-Betriebssystem (111, 121) installierte Container-Laufzeitumgebung (112, 122) geladen und dort ausgeführt werden. Die ersten Steuerungsanwendungen werden mittels eines Anwendungs-Management-Systems (200) überwacht und konfiguriert. Außerdem werden die ersten Steuerungsanwendungen mittels des Anwendungs-Management-Systems authentifiziert. Zweite Steuerungsanwendungen (114, 124) werden unmittelbar auf einem Host-Betriebssystem (111, 121) ausgeführt und kryptographisch authentifiziert. Datenverkehr (11) der ersten und der zweiten Steuerungsanwendungen zu Zielgeräten (103, 301) und/oder -anwendungen wird nach erfolgreicher Authentifizierung jeweils mittels eines in den Datenverkehr eingefügten, zumindest temporär gültigen Zugriffsschlüssels (12) autorisiert.

## Beschreibung

Die vorliegende Erfindung betrifft ein Verfahren zur Einräumung von Zugriffsrechten an Steuerungsanwendungen eines industriellen Automatisierungssystems sowie ein System, das zur Durchführung des Verfahrens geeignet ist.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Hosts oder virtuelle Maschinen eines industriellen Automatisierungssystems verteilt werden.

WO 2021/104632 A1 betrifft ein Verfahren zur Erfassung von Datenpakten, die von einem ersten Container innerhalb eines Clusters von Containern stammen. Dabei sind jedem Container mehrere Netzwerk-Schnittstellen zur Übermittlung von Datenpaketen zugeordnet. Sobald eine erste Verbindung zur Übermittlung von Datenpaketen über eine erste Netzwerk-Schnittstelle, die dem ersten Container zugeordnet ist, detektiert wird, wird eine dem ersten Container zugeordnete Kennung in einen der ersten Verbindung zugeordneten Datenstrom eingefügt. Anhand der eingefügten Kennung kann der erste Container zur Erfassung von Datenpakten, die von ihm stammen, identifiziert werden.

In der älteren europäischen Patentanmeldung mit dem Anmeldeaktenzeichen 21212849.0 ist betrifft ein Verfahren zur Bereitstellung von Steuerungsanwendungen beschrieben, bei dem die Steuerungsanwendungen jeweils mittels Ablaufsteuerungskomponenten bereitgestellt werden, die in eine mittels einer Server-Einrichtung gebildete Ablaufsteuerungsumgebung ladbar und dort ausführbar sind. Steuerungsanwendungen, die ausgewählte Sicherheitsberechtigungen erfordern, wird jeweils eine Kennzeichnung als sicherheitskritische Steuerungsanwendung zugeordnet. Für die Steuerungsanwendungen, denen eine Kennzeichnung als sicherheitskritische Steuerungsanwendung zugeordnet ist, wird jeweils zumindest eine Ablaufbedingung für die ausgewählten Sicherheitsberechtigungen festgelegt. Die Ablaufsteuerungsumgebung überwacht während einer Ausführung der Ablaufsteuerungskomponenten für die Steuerungsanwendungen jeweils ein Eintreten der jeweiligen Ablaufbedingung. Die Ausführung der Ablaufsteuerungskomponenten wird jeweils bei Eintreten der jeweiligen Ablaufbedingung beendet.

In industriellen Automatisierungssystemen gibt es zahlreiche Steuerungsanwendungen, die sich gegenüber anderen Systemen oder Systemkomponenten authentisieren müssen. Bei bestehenden, insbesondere älteren Steuerungsanwendungen oder bei Steuerungsanwendungen von Drittanbietern ist vielfach problematisch, dass diese durch Zielsysteme jeweils geforderte Authentisierungsverfahren nicht unterstützen. Dies hat üblicherweise zur Folge, dass Steuerungsanwendungen aufwendig an die geforderten Authentisierungsverfahren angepasst werden müssen oder dass eine Authentifizierung gar deaktiviert wird.

Auch Token-basierte Verfahren sind hierfür keine Lösung, da mit derartigen Verfahren im Allgemeinen keine Identifizierung einer auf ein Zielsystem zugreifenden Komponente erfolgt.

Der vorliegenden Erfindung liegt die Aufgabe zugrunde, ein Verfahren zur Einräumung von Zugriffsrechten an Steuerungsanwendungen zu schaffen, das in industriellen Automatisierungssystemen einen Zugriff auf beliebige Zielgeräte bzw. -anwendungen unabhängig von einem durch die jeweilige Steuerungsanwendung direkt unterstützten Authentisierungsverfahren ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur Einräumung von Zugriffsrechten an Steuerungsanwendungen eines industriellen Automatisierungssystems werden erste Steuerungsanwendungen mittels Software-Containern bereitgestellt, die in eine auf einem Host-Betriebssystem installierte Container-Laufzeitumgebung geladen und dort ausgeführt werden. Die ersten Steuerungsanwendungen werden mittels eines Anwendungs-Management-Systems überwacht und konfiguriert. Außerdem werden die ersten Steuerungsanwendungen mittels des Anwendungs-Management-Systems authentifiziert. Zweite Steuerungsanwendungen werden unmittelbar auf einem Host-Betriebssystem ausgeführt und kryptographisch authentifiziert. Insbesondere weisen die ersten und die zweiten Steuerungsanwendungen jeweils keine Authentisierungsfunktionen auf bzw. nehmen diese wahr.

Datenverkehr der ersten und der zweiten Steuerungsanwendungen zu Zielgeräten bzw. -anwendungen wird erfindungsgemäß nach erfolgreicher Authentifizierung jeweils mittels eines in den Datenverkehr eingefügten, zumindest temporär gültigen Zugriffsschlüssels autorisiert. Die Zugriffsschlüssel werden vorteilhafterweise jeweils durch eine von den ersten und den zweiten Steuerungsanwendungen separierte zugeordnete Injektor-Komponente in den jeweiligen Datenverkehr eingefügt. Dabei werden die ersten und die zweiten Steuerungsanwendungen gegenüber der jeweiligen zugeordneten Injektor-Komponente authentifiziert. Darüber hinaus wird der Datenverkehr vorzugsweise nur für vertrauenswürdige erste und zweite Steuerungsanwendungen autorisiert, die über einen vertrauenswürdigen Weg bzw. von einer vertrauenswürdigen Instanz bereitgestellt werden.

Im Gegensatz zu aus dem Stand der Technik bekannten Ansätzen, bei denen primär Kommunikationsverbindungen kryptographisch abgesichert werden und grundsätzlich durch beliebige Anwendungen genutzt werden können, werden mit der vorliegenden Erfindung vertrauenswürdige Steuerungsanwendungen identifiziert, um auf dieser Basis einen Zugriff auf kritische Ressourcen zu autorisieren. Insbesondere ist es dabei nicht erforderlich, dass die Steuerungsanwendungen selbst Authentisierungsfunktionen umfassen bzw. bereitstellen.

Vorteilhafterweise werden die zweiten Steuerungsanwendungen mittels digitaler Signaturen, Rechenprozess-Identifikatoren bzw. Betriebssystem-seitig kryptographisch authentifiziert. Dabei können Root Keys zur Authentifizierung während Inbetriebnahmeprozessen von Automatisierungsgeräten, auf den die zweiten Steuerungsanwendungen installiert sind, auf das jeweilige Automatisierungsgerät übertragen werden. Für eine erfolgreiche Authentifizierung einer zweiten Steuerungsanwendung ist jeweils ein solcher Root Key auf dem jeweiligen Automatisierungsgerät erforderlich. Die Root Keys können beispielsweise bei Betrieb der Automatisierungsgeräte jeweils laufend ausgetauscht werden, so dass sich mit der vorliegenden Erfindung auch strenge Sichersicherheitsanforderungen erfüllen lassen.

Entsprechend einer weiteren Ausgestaltung der vorliegenden Erfindung sind die ersten und die zweiten Steuerungsanwendungen auf Automatisierungsgeräten installiert, die von einem abgesicherten Teilnetz umfasst sind, das dem industriellen Automatisierungssystem zugeordnet ist. In diesem Fall erfolgt ein Zugriff auf die ersten und die zweiten Steuerungsanwendungen von außerhalb des abgesicherten Teilnetzes nur nach Autorisierung durch das Anwendungs-Management-System. Hierdurch wird eine sichere Interaktion der ersten und der zweiten Steuerungsanwendungen insbesondere mit Cloud-Computing-Systemen sichergestellt.

Darüber hinaus kann vorteilhafterweise vorgesehen sein, dass die ersten und die zweiten Steuerungsanwendungen für einen Zugriff auf ein Cloud-Computing-System außerhalb des abgesicherten Teilnetzes gegenüber einer dem Anwendungs-Management-System zugeordneten Injektor-Komponente authentifiziert werden. Dabei fügt die dem Anwendungs-Management-System zugeordnete Injektor-Komponente nach erfolgreicher Authentisierung jeweils zumindest temporär gültige Zugriffsschlüssel in Datenverkehr der ersten und der zweiten Steuerungsanwendungen zum Cloud-Computing-System ein. Der Zugriff der ersten und der zweiten Steuerungsanwendungen auf das Cloud-Computing-System wird dann sicher und effizient mittels dieser Zugriffsschlüssel autorisiert.

Die Software-Container für die ersten Steuerungsanwendungen können jeweils von einem Automatisierungsgerät mit Container-Laufzeitumgebung auf ein anderes Automatisierungsgerät mit Container-Laufzeitumgebung zur dortigen Ausführung migriert bzw. auf mehreren Automatisierungsgeräten mit Container-Laufzeitumgebung zeitgleich ausgeführt werden. Vorzugsweise erfasst das Anwendungs-Management-System ein Anlegen, ein Löschen bzw. eine Änderung der Software-Container und registriert die Software-Container mit ihrem jeweiligen Ausführungsstatus. Dabei umfasst das Anlegen, das Löschen bzw. die Änderung der Software-Container jeweils ein Allokieren oder Freigeben von Ressourcen im jeweiligen Automatisierungsgerät mit Container-Laufzeitumgebung. Auf diese Weise können die ersten Steuerungsanwendungen konsistent durch das Anwendungs-Management-System orchestriert und hinsichtlich ihres Datenverkehrs autorisiert werden.

Das erfindungsgemäße System zur Durchführung eines Verfahrens entsprechend vorangehenden Ausführungen vorgesehen und umfasst mehrere Automatisierungsgeräte, die dazu ausgestaltet und eingerichtet sind, erste Steuerungsanwendungen mittels Software-Containern bereitzustellen, die in eine auf einem Host-Betriebssystem installierte Container-Laufzeitumgebung ladbar und dort ausführbar sind. Außerdem sind ausgewählte Automatisierungsgeräte dazu ausgestaltet und eingerichtet, zweite Steuerungsanwendungen unmittelbar auf einem Host-Betriebssystem auszuführen und kryptographisch zu authentifizieren.

Darüber hinaus umfasst das erfindungsgemäße System ein Anwendungs-Management-System, das dazu ausgestaltet und eingerichtet ist, die ersten Steuerungsanwendungen zu überwachen, zu konfigurieren und zu authentifizieren. Ferner ist das System dazu ausgestaltet und eingerichtet, Datenverkehr der ersten und der zweiten Steuerungsanwendungen zu Zielgeräten bzw. -anwendungen nach erfolgreicher Authentifizierung jeweils mittels eines in den Datenverkehr eingefügten, zumindest temporär gültigen Zugriffsschlüssels zu autorisieren.

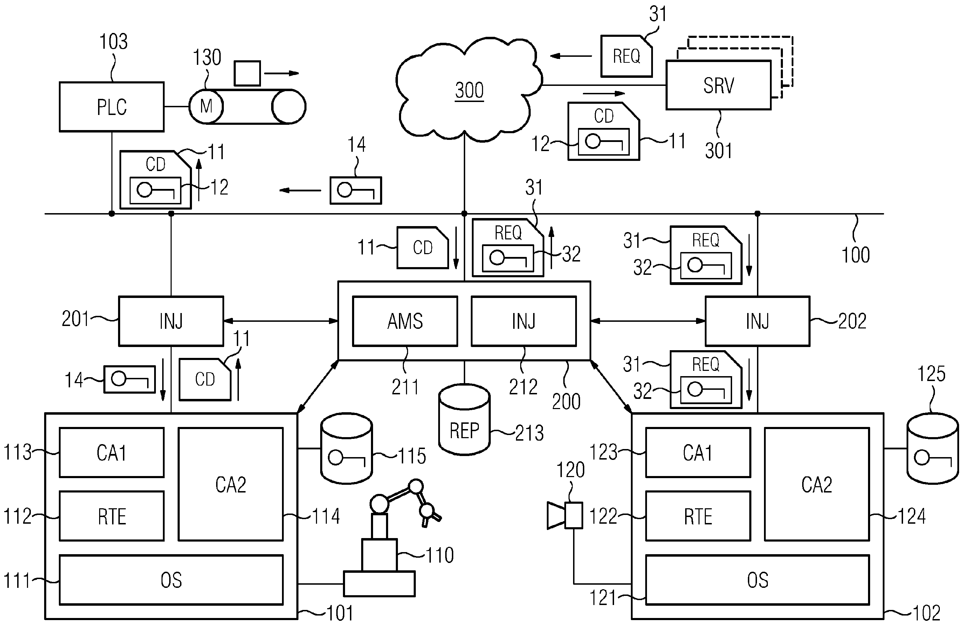

Die vorliegende Erfindung wird nachfolgend an einem Ausführungsbeispiel anhand der Zeichnung näher erläutert. Es zeigt die
- Figur: ein System mit mehreren Automatisierungsgeräten, einem Anwendungs-Management-System und einem Cloud-Computing-System.

Das in der Figur dargestellte System umfasst mehrere Automatisierungsgeräte 101-103, ein Anwendungs-Management-System 200 und ein Cloud-Computing-System 301. Die Automatisierungsgeräte 101-103 und das Anwendungs-Management-System 200 sind von einem abgesicherten Teilnetz 100 umfasst, das einem industriellen Automatisierungssystem zugeordnet ist. Das abgesicherte Teilnetz 100 ist über ein Weitverkehrsnetz 300, das insbesondere Internet-Kommunikationsverbindungen bereitstellt, mit dem Cloud-Computing-System 301 verbunden. Vorzugsweise für das abgesicherten Teilnetz 100 ein Firewall-System vorgesehen, das beispielsweise in das Anwendungs-Management-System 200 integriert sein kann. Das Cloud-Computing-Systeme 301 umfasst zumindest einen Server, durch den IT-Infrastruktur, wie Speicherplatz, Rechenleistung oder Anwendungssoftware, als Dienst insbesondere für die Automatisierungsgeräte 101-103 oder für das Anwendungs-Management-System 200 bereitgestellt wird.

Die Automatisierungsgeräte 101-103 können beispielsweise Bedien- und Beobachtungsstationen, speicherprogrammierbare Steuerungen, RFID-Lesegeräte oder Systeme für maschinelle Bildverarbeitung sein. Neben den Automatisierungsgeräten 101-103 können auch Netzinfrastrukturgeräte, wie Switche oder Router, vom abgesicherten Teilnetz 100 umfasst sein. Netzinfrastrukturgeräte dienen insbesondere zum Anschluss von speicherprogrammierbaren Steuerungen, Eingabe/Ausgabe-Einheiten (I/O-Module) oder Bedien- und Beobachtungsstationen des industriellen Automatisierungssystems.

Speicherprogrammierbare Steuerungen umfassen beispielsweise jeweils ein Kommunikationsmodul, eine Zentraleinheit sowie zumindest eine Eingabe/Ausgabe-Einheit. Eingabe/Ausgabe-Einheiten dienen einem Austausch von Steuerungs- und Messgrößen zwischen speicherprogrammierbaren Steuerungen und durch die speicherprogrammierbaren Steuerungen gesteuerten Maschinen oder Vorrichtungen 110, 120, 130. Die Zentraleinheiten sind insbesondere für eine Ermittlung geeigneter Steuerungsgrößen aus erfassten Messgrößen vorgesehen. Eingabe/Ausgabe-Einheiten können grundsätzlich auch als dezentrale Peripheriemodule ausgestaltet sein, die entfernt von einer speicherprogrammierbaren Steuerung angeordnet sind.

Die Automatisierungsgeräte 101-103 sind dazu ausgestaltet und eingerichtet, erste Steuerungsanwendungen 113, 123 mittels Software-Containern bereitzustellen, die in eine auf einem Host-Betriebssystem 111, 121 installierte Container-Laufzeitumgebung 112, 122 ladbar und dort ausführbar sind. Die ersten Steuerungsanwendungen 113, 123 können insbesondere Funktionen von Automatisierungsgeräten, beispielsweise Steuerungs- und Überwachungsfunktionen, oder andere zeitkritische Dienste implementieren.

Im vorliegenden Ausführungsbeispiel werden die ersten Steuerungsanwendungen 113, 123 mittels des Anwendungs-Management-Systems 200 überwacht und konfiguriert. Dabei erfasst das Anwendungs-Management-System 200 ein Anlegen, ein Löschen bzw. eine Änderung der Software-Container und registriert die Software-Container mit ihrem jeweiligen Ausführungsstatus. Das Anlegen, das Löschen bzw. die Änderung der Software-Container umfasst insbesondere jeweils ein Allokieren oder Freigeben von Ressourcen im jeweiligen Automatisierungsgerät 101-102 mit Container-Laufzeitumgebung 112, 122.

Außerdem umfasst das Anwendungs-Management-System 200 ein Image-Repository 213 zur Bereitstellung von Speicherabbildern (Images) für die Software-Container. Alternativ oder zusätzlich können die Speicherabbilder für die Software-Container aus einem durch eine Vielzahl von Nutzern lesend bzw. schreibend zugreifbaren Speicher- und Bereitstellungssystem, wie Docker Hub oder eine andere Container Registry, abgerufen werden.

Insbesondere können die Software-Container für die ersten Steuerungsanwendungen 113, 123 jeweils von einem Automatisierungsgerät 101, 102 mit Container-Laufzeitumgebung 112, 122 auf ein anderes Automatisierungsgerät 102, 101 mit Container-Laufzeitumgebung 122, 112 zur dortigen Ausführung migriert bzw. auf mehreren Automatisierungsgeräten 101-103 mit Container-Laufzeitumgebung 112, 122 zeitgleich ausgeführt werden. Vorzugsweise sind Software-Container jeweils dafür ausgestaltet und eingerichtet, von anderen Software-Containern oder Container-Gruppen, z.B. Pods, isoliert innerhalb der Container-Laufzeitumgebung auf dem jeweiligen Host-Betriebssystem 111, 121 abzulaufen. Vorteilhafterweise nutzen die Software-Container jeweils gemeinsam mit anderen auf dem jeweiligen Automatisierungsgerät ablaufenden Software-Containern einen Kernel des Host-Betriebssystems 111, 121. Grundsätzlich können für die Software-Container alternativ zu Docker Containern auch andere Micro-Virtualisierungskonzepte, wie Snaps, verwendet werden.

Im vorliegenden Ausführungsbeispiel ist die Container-Laufzeitumgebung eine Container Engine, durch die ein Anlegen, Löschen bzw. Verknüpfen von virtuellen Ressourcen erfolgt. Dabei umfassen die virtuellen Ressourcen neben Software-Containern auch virtuelle Kommunikationsnetze und diesen zugeordnete Verbindungen. Insbesondere kann die Container-Laufzeitumgebung eine Docker Engine oder einen Snap Core umfassen, die bzw. der auf dem jeweiligen Automatisierungsgerät 101-102 abläuft.

Ferner sind die Automatisierungsgeräte 101-102 dazu ausgestaltet und eingerichtet, zweite Steuerungsanwendungen 114, 124 unmittelbar auf dem jeweiligen Host-Betriebssystem 111, 121 auszuführen und kryptographisch zu authentifizieren. Die ersten Steuerungsanwendungen 113, 123 werden dagegen mittels des Anwendungs-Management-Systems 200 authentifiziert. Insbesondere weisen die ersten 113, 123 und die zweiten Steuerungsanwendungen 114, 124 jeweils keine Authentisierungsfunktionen auf bzw. nehmen diese wahr.

Die zweiten Steuerungsanwendungen 114, 124 können beispielsweise mittels digitaler Signaturen, Rechenprozess-Identifikatoren bzw. Betriebssystem-seitig kryptographisch authentifiziert werden. Im vorliegenden Ausführungsbeispiel ist für eine erfolgreiche Authentifizierung einer zweiten Steuerungsanwendung 114, 124 jeweils ein Root Key auf dem jeweiligen Automatisierungsgerät 101-102 erforderlich. Vorzugsweise werden die Root Keys 14 zur Authentifizierung während eines Inbetriebnahmeprozesses des jeweiligen Automatisierungsgeräts 101-102, auf dem zumindest eine zweite Steuerungsanwendung 114, 124 installiert ist, auf das Automatisierungsgerät 101, 102 übertragen und dort in einem Key-Repository 115, 125 gespeichert. Die Root Keys 14 können beispielsweise durch das Anwendungs-Management-System 200 auf die Automatisierungsgeräte 101-102 übertragen werden. Vorteilhafterweise werden die Root Keys 14 bei Betrieb der Automatisierungsgeräte 101-102 jeweils laufend ausgetauscht.

Datenverkehr 11 der ersten und der zweiten Steuerungsanwendungen zu Zielgeräten 103 bzw. dortigen Zielanwendungen wird nach erfolgreicher Authentifizierung jeweils mittels eines in den Datenverkehr 11 eingefügten, zumindest temporär gültigen Zugriffsschlüssels 12 autorisiert. Dabei wird der Datenverkehr 11 für nur vertrauenswürdige erste 113-114 und zweite Steuerungsanwendungen 123-124 autorisiert, die über einen vertrauenswürdigen Weg bzw. von einer vertrauenswürdigen Instanz, insbesondere vom Anwendungs-Management-System 200, bereitgestellt werden. Die Zugriffsschlüssel 12 werden jeweils durch eine von den ersten 113, 113 und den zweiten Steuerungsanwendungen 114, 124 separierte zugeordnete Injektor-Komponente 201-202 in den jeweiligen Datenverkehr 11 eingefügt. Dabei werden die ersten 113, 123 und die zweiten Steuerungsanwendungen 114, 124 gegenüber der jeweiligen zugeordneten Injektor-Komponente 201-202 authentifiziert.

Neben einer Anwendungs-Management-Komponente 211 umfasst das Anwendungs-Management-System 200 im vorliegenden Ausführungsbeispiel eine Injektor-Komponente 212. Mittels dieser Injektor-Komponente 212 wird sichergestellt, dass ein Zugriff auf die ersten 113, 123 und die zweiten Steuerungsanwendungen 114, 124 von außerhalb des abgesicherten Teilnetzes 100 nur nach Autorisierung durch das Anwendungs-Management-System 200 erfolgt. Hierzu fügt das Anwendungs-Management-System 200 beispielsweise in Zugriffsanforderungen des 31 Cloud-Computing-Systems 301 Zugriffsschlüssel 32 ein, durch die ein Zugriff auf die ersten 113, 123 und die zweiten Steuerungsanwendungen 114, 124 autorisiert wird.

Insbesondere werden die ersten und die zweiten Steuerungsanwendungen für einen Zugriff auf das Cloud-Computing-System 301 außerhalb des abgesicherten Teilnetzes 100 gegenüber der Injektor-Komponente 212 des Anwendungs-Management-Systems 200 authentifiziert. Außerdem fügt die Injektor-Komponente 212 des Anwendungs-Management-Systems 200 nach erfolgreicher Authentisierung jeweils zumindest temporär gültige Zugriffsschlüssel 12 in Datenverkehr 11 der ersten und der zweiten Steuerungsanwendungen zum Cloud-Computing-System 301 ein. Mittels dieser Zugriffsschlüssel 12 wird der Zugriff der ersten und der zweiten Steuerungsanwendungen auf das Cloud-Computing-System 301 autorisiert.

## Patentansprüche

1. Verfahren zur Einräumung von Zugriffsrechten an Steuerungsanwendungen eines industriellen Automatisierungssystems, bei dem
- erste Steuerungsanwendungen (113, 123) mittels Software-Containern bereitgestellt werden, die in eine auf einem Host-Betriebssystem (111, 121) installierte Container-Laufzeitumgebung (112, 122) geladen und dort ausgeführt werden,
- die ersten Steuerungsanwendungen mittels eines Anwendungs-Management-Systems (200) überwacht und konfiguriert werden,
- die ersten Steuerungsanwendungen mittels des Anwendungs-Management-Systems authentifiziert werden,
- zweite Steuerungsanwendungen (114, 124) unmittelbar auf einem Host-Betriebssystem (111, 121) ausgeführt und kryptographisch authentifiziert werden,
- Datenverkehr (11) der ersten und der zweiten Steuerungsanwendungen zu Zielgeräten (103, 301) und/oder -anwendungen nach erfolgreicher Authentifizierung jeweils mittels eines in den Datenverkehr eingefügten, zumindest temporär gültigen Zugriffsschlüssels (12) autorisiert wird.

2. Verfahren nach Anspruch 1,
bei dem der Datenverkehr (11) für nur vertrauenswürdige erste (113, 123) und zweite Steuerungsanwendungen (114, 124) autorisiert wird, die über einen vertrauenswürdigen Weg und/oder von einer vertrauenswürdigen Instanz (200) bereitgestellt werden.

3. Verfahren nach einem der Ansprüche 1 oder 2,
bei dem die Zugriffsschlüssel (12) jeweils durch eine von den ersten (113, 123) und den zweiten Steuerungsanwendungen (114, 124) separierte zugeordnete Injektor-Komponente (201, 202, 212) in den jeweiligen Datenverkehr (11) eingefügt werden und bei dem die ersten und die zweiten Steuerungsanwendungen gegenüber der jeweiligen zugeordneten Injektor-Komponente authentifiziert werden.

4. Verfahren nach einem der Ansprüche 1 bis 3,
bei dem die zweiten Steuerungsanwendungen mittels digitaler Signaturen, Rechenprozess-Identifikatoren und/oder Betriebssystem-seitig kryptographisch authentifiziert werden.

5. Verfahren nach Anspruch 4,
bei dem Root Keys (14) zur Authentifizierung während Inbetriebnahmeprozessen von Automatisierungsgeräten (101-102), auf den die zweiten Steuerungsanwendungen (114, 124) installiert sind, auf das jeweilige Automatisierungsgerät übertragen werden und bei dem für eine erfolgreiche Authentifizierung einer zweiten Steuerungsanwendung jeweils ein Root Key auf dem jeweiligen Automatisierungsgerät erforderlich ist.

6. Verfahren nach Anspruch 5,
bei dem die Root Keys bei Betrieb der Automatisierungsgeräte jeweils laufend ausgetauscht werden.

7. Verfahren nach einem der Ansprüche 1 bis 6,
bei dem die ersten und die zweiten Steuerungsanwendungen jeweils keine Authentisierungsfunktionen aufweisen und/oder wahrnehmen.

8. Verfahren nach einem der Ansprüche 1 bis 7,
bei dem die ersten und die zweiten Steuerungsanwendungen auf Automatisierungsgeräten (101-102) installiert sind, die von einem abgesicherten Teilnetz (100) umfasst sind, das dem industriellen Automatisierungssystem zugeordnet ist, und bei dem ein Zugriff auf die ersten und die zweiten Steuerungsanwendungen von außerhalb des abgesicherten Teilnetzes nur nach Autorisierung durch das Anwendungs-Management-System (200) erfolgt.

9. Verfahren nach Anspruch 8,
bei dem die ersten (113, 123) und die zweiten Steuerungsanwendungen (114, 124) für einen Zugriff auf ein Cloud-Computing-System (301) außerhalb des abgesicherten Teilnetzes (100) gegenüber einer dem Anwendungs-Management-System (200) zugeordneten Injektor-Komponente (212) authentifiziert werden, bei dem die dem Anwendungs-Management-System zugeordnete Injektor-Komponente nach erfolgreicher Authentisierung jeweils zumindest temporär gültige Zugriffsschlüssel (12) in Datenverkehr (11) der ersten und der zweiten Steuerungsanwendungen zum Cloud-Computing-System eingefügt und bei dem der Zugriff der ersten und der zweiten Steuerungsanwendungen auf das Cloud-Computing-System mittels dieser Zugriffsschlüssel autorisiert wird.

10. Verfahren nach einem der Ansprüche 1 bis 9,
bei dem die Software-Container für die ersten Steuerungsanwendungen jeweils von einem Automatisierungsgerät mit Container-Laufzeitumgebung auf ein anderes Automatisierungsgerät mit Container-Laufzeitumgebung zur dortigen Ausführung migrierbar und/oder auf mehreren Automatisierungsgeräten mit Container-Laufzeitumgebung zeitgleich ausführbar sind.

11. Verfahren nach Anspruch 10,
bei dem das Anwendungs-Management-System ein Anlegen, ein Löschen und/oder eine Änderung der Software-Container erfasst und die Software-Container mit ihrem jeweiligen Ausführungsstatus registriert und bei dem das Anlegen, das Löschen und/oder die Änderung der Software-Container jeweils ein Allokieren oder Freigeben von Ressourcen im jeweiligen Automatisierungsgerät mit Container-Laufzeitumgebung umfasst.

12. System zur Durchführung eines Verfahrens nach einem der Ansprüche 1 bis 11 mit
- mehreren Automatisierungsgeräten (101-102), die dazu ausgestaltet und eingerichtet sind, erste Steuerungsanwendungen (113, 123) mittels Software-Containern bereitzustellen, die in eine auf einem Host-Betriebssystem (111, 121) installierte Container-Laufzeitumgebung (112, 122) ladbar und dort ausführbar sind, wobei ausgewählte Automatisierungsgeräte dazu ausgestaltet und eingerichtet sind, zweite Steuerungsanwendungen (114, 124) unmittelbar auf einem Host-Betriebssystem auszuführen und kryptographisch zu authentifizieren,
- einem Anwendungs-Management-System (200), das dazu ausgestaltet und eingerichtet ist, die ersten Steuerungsanwendungen zu überwachen, zu konfigurieren und zu authentifizieren,
- wobei das System dazu ausgestaltet und eingerichtet ist, Datenverkehr (11) der ersten und der zweiten Steuerungsanwendungen zu Zielgeräten (103, 301) und/oder -anwendungen nach erfolgreicher Authentifizierung jeweils mittels eines in den Datenverkehr eingefügten, zumindest temporär gültigen Zugriffsschlüssels (12) zu autorisieren.
